# EUROPEAN PATENT APPLICATION

(11) **EP 2 858 045 A1**
(43) Date of publication of application: **08.04.2015**
(21) Application number: 13797576.9
(22) Date of filing: 22.05.2013
(51) Int. Cl.: G07G 1/14, G06Q 30/06

(54) **INFORMATION PROCESSING SYSTEM, INFORMATION PROCESSING DEVICE, INFORMATION PROCESSING METHOD, INFORMATION PROCESSING PROGRAM, MOBILE COMMUNICATION TERMINAL, AND CONTROL METHOD AND CONTROL PROGRAM THEREFOR**

(30) Priority: 31.05.2012 JP 2012125369
(71) Applicant: NEC Corporation, Tokyo 108-8001 (JP)
(72) Inventor: KOBAYASHI Yoshikazu, Tokyo 108-8001 (JP)
(74) Representative: Vossius & Partner
(86) International application number: PCT/JP2013/064237
(87) International publication number: WO 2013/179984

(57) **Abstract**

An information processing apparatus includes an acquirer that, when a sales assistant device is connected to a portable communication terminal, acquires, via the portable communication terminal, specifying information for specifying the sales assistant device, a driver executor that executes a driver program corresponding to the specifying information and controls the sales assistant device, an application executor that executes a sales management application program corresponding to the specifying information and transmits sales processing screen information to the portable communication terminal, and a specifier that specifies, based on the specifying information, a sales management database in which sales-related information acquired under control of the sales assistant device should be accumulated.

## Description

### TECHNICAL FIELD

The present invention relates to a sales management technique.

### BACKGROUND ART

In the above technical field, patent literature 1 discloses a management server that, upon receiving the model of a peripheral device from a POS (Point Of Sales) terminal (PC), transmits software such as a device driver corresponding to each model to install the software.

Further, paragraphs 0047 and 0048 of patent literature 2 disclose a technique in which sales are inquired of a POS terminal in a store from the terminal of a manager by using a store code, and the POS terminal transmits the requested sales information to the terminal of the manager.

### CITATION LIST

### PATENT LITERATURE

Patent literature 1: Japanese Patent Laid-Open No. 2005-084759

Patent literature 2: Japanese Patent Laid-Open No. 09-265581

### SUMMARY OF THE INVENTION

### TECHNICAL PROBLEM

In the techniques described in the above literatures, however, the POS system cannot be constituted without a PC having a sufficient storage capacity. In addition, a terminal synchronized with an existing POS system cannot be easily introduced.

The present invention enables to provide a technique of solving the above-described problem.

### SOLUTION TO PROBLEM

One aspect of the present invention provides an information processing apparatus comprising:
an acquirer that, when a sales assistant device is connected to a portable communication terminal, acquires, via the portable communication terminal, specifying information for specifying the sales assistant device;
a driver executor that executes a driver program corresponding to the specifying information and controls the sales assistant device;
an application executor that executes a sales management application program corresponding to the specifying information and transmits sales processing screen information to the portable communication terminal; and
a specifier that specifies, based on the specifying information, a sales management database in which sales-related information acquired under control of the sales assistant device should be accumulated.

Another aspect of the present invention provides a method comprising:
when a sales assistant device is connected to a portable communication terminal, acquiring, via the portable communication terminal, specifying information for specifying the sales assistant device;
executing a driver program corresponding to the specifying information to control the sales assistant device;
executing an application program corresponding to the specifying information to transmit sales processing screen information to the portable communication terminal; and
specifying, based on the specifying information, a sales management database in which sales-related information acquired under control of the sales assistant device should be accumulated.

Still other aspect of the present invention provides a program for causing a computer to execute a method, comprising:
when a sales assistant device is connected to a portable communication terminal, acquiring, via the portable communication terminal, specifying information for specifying the sales assistant device;
executing a driver program corresponding to the specifying information to control the sales assistant device;
executing an application program corresponding to the specifying information to transmit sales processing screen information to the portable communication terminal; and
specifying, based on the specifying information, a sales management database in which sales-related information acquired under control of the sales assistant device should be accumulated.

Still other aspect of the present invention provides a portable communication terminal comprising:
a determinator that, when a sales assistant device is connected via a communication interface, determines whether a local terminal can control the sales assistant device;
a requester that, when the determinator determines that the local terminal cannot control the sales assistant device, accesses a server via a wireless communication network, and requests control of the sales assistant device;
a signal transfer controller that controls signal transfer between the sales assistant device and the server via the communication interface and the wireless communication network so as to be able to establish communication between the sales assistant device and the server and acquire sales-related information by the server from the sales assistant device; and
a receiver that receives, from the server, sales processing screen information generated by executing, by the server, a sales management application program corresponding to the sales assistant device.

Still other aspect of the present invention provides a control method of a portable communication terminal, comprising:
when a sales assistant device is connected via a communication interface, determining whether a local terminal can control the sales assistant device;
when the local terminal is determined not to be able to control the sales assistant device, accessing a server via a wireless communication network to request control of the sales assistant device;
controlling signal transfer between the sales assistant device and the server via the communication interface and the wireless communication network so as to be able to establish communication between the sales assistant device and the server and acquire sales-related information by the server from the sales assistant device; and
receiving, from the server, sales processing screen information generated by executing, by the server, a sales management application program corresponding to the sales assistant device.

Still other aspect of the present invention provides a control program of a portable communication terminal for causing a computer to execute a method, comprising:
when a sales assistant device is connected via a communication interface, determining whether a local terminal can control the sales assistant device;
when the local terminal is determined not to be able to control the sales assistant device, accessing a server via a wireless communication network to request control of the sales assistant device;
controlling signal transfer between the sales assistant device and the server via the communication interface and the wireless communication network so as to be able to establish communication between the sales assistant device and the server and acquire sales-related information by the server from the sales assistant device; and
receiving, from the server, sales processing screen information generated by executing, by the server, a sales management application program corresponding to the sales assistant device.

Still other aspect of the present invention provides an information processing system comprising:
an information processing apparatus including:
   an acquirer that, when a sales assistant device is connected to a portable communication terminal, acquires, via the portable communication terminal, specifying information for specifying the sales assistant device;
   a driver executor that executes a driver program corresponding to the specifying information and controls the sales assistant device;
   an application executor that executes a sales management application program corresponding to the specifying information and transmits sales processing screen information to the portable communication terminal; and
   a specifier that specifies, based on the specifying information, a sales management database in which sales-related information acquired under control of the sales assistant device should be accumulated;
   the portable communication terminal; and
   the sales assistant device.

### ADVANTAGEOUS EFFECTS OF INVENTION

According to the present invention, a terminal synchronized with an existing POS system can be easily introduced.

### BRIEF DESCRIPTION OF DRAWINGS

Fig. 1 is a block diagram showing the arrangement of an information processing system according to the first embodiment of the present invention;
Fig. 2 is a view showing the arrangement of a system including a cloud server according to the second embodiment of the present invention;
Fig. 3 is a view showing an example of the use of the system including the cloud server according to the second embodiment of the present invention;
Fig. 4 is a block diagram showing the functional arrangement of the cloud server according to the second embodiment of the present invention;
Fig. 5 is a block diagram showing the functional arrangement of a smart device according to the second embodiment of the present invention;
Fig. 6 is a sequence chart showing the overall processing sequence of the system including the cloud server according to the second embodiment of the present invention;
Fig. 7A is a flowchart showing a processing sequence to be performed in the cloud server according to the second embodiment of the present invention;
Fig. 7B is a chart showing an example of packet transmission/reception processing in an information processing system according to the second embodiment of the present invention;
Fig. 7C is a chart showing another example of packet transmission/reception processing in the information processing system according to the second embodiment of the present invention;
Fig. 7D is a chart showing still another example of packet transmission/reception processing in the information processing system according to the second embodiment of the present invention;
Fig. 7E is a table showing the structure of a device database used in the information processing system according to the second embodiment of the present invention;
Fig. 8A is a chart showing an example of communication establishment processing between a server and a device in the information processing system according to the second embodiment of the present invention;
Fig. 8B is a chart showing the example of communication establishment processing between the server and the device in the information processing system according to the second embodiment of the present invention;
Fig. 8C is a chart showing the example of communication establishment processing between the server and the device in the information processing system according to the second embodiment of the present invention;
Fig. 8D is a chart showing the example of communication establishment processing between the server and the device in the information processing system according to the second embodiment of the present invention;
Fig. 9A is a view showing an example of a display screen displayed on the smart device in the second embodiment of the present invention;
Fig. 9B is a view showing an example of a display screen displayed on the smart device in the second embodiment of the present invention;
Fig. 9C is a view showing an example of a display screen displayed on the smart device in the second embodiment of the present invention;
Fig. 10 is a table showing the structure of a device database used in the information processing system according to the second embodiment of the present invention;
Fig. 11 is a table showing the structure of a sales management database used in the information processing system according to the second embodiment of the present invention;
Fig. 12 is a view showing the arrangement of a system including a cloud server according to the third embodiment of the present invention;
Fig. 13 is a table showing the structure of a merchandise specifying table used in the cloud server according to the third embodiment of the present invention;
Fig. 14 is a view showing the arrangement of a system including a cloud server according to the fourth embodiment of the present invention;
Fig. 15 is a view showing the arrangement of a system including a cloud server according to the fifth embodiment of the present invention;
Fig. 16 is a view showing the arrangement of a system including a cloud server according to the sixth embodiment of the present invention;
Fig. 17 a block diagram showing the arrangement of the cloud server according to the sixth embodiment of the present invention;
Fig. 18 is a sequence chart showing the overall processing sequence of the system including the cloud server according to the sixth embodiment of the present invention; and
Fig. 19 is a view showing the arrangement of a system including a cloud server according to the seventh embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

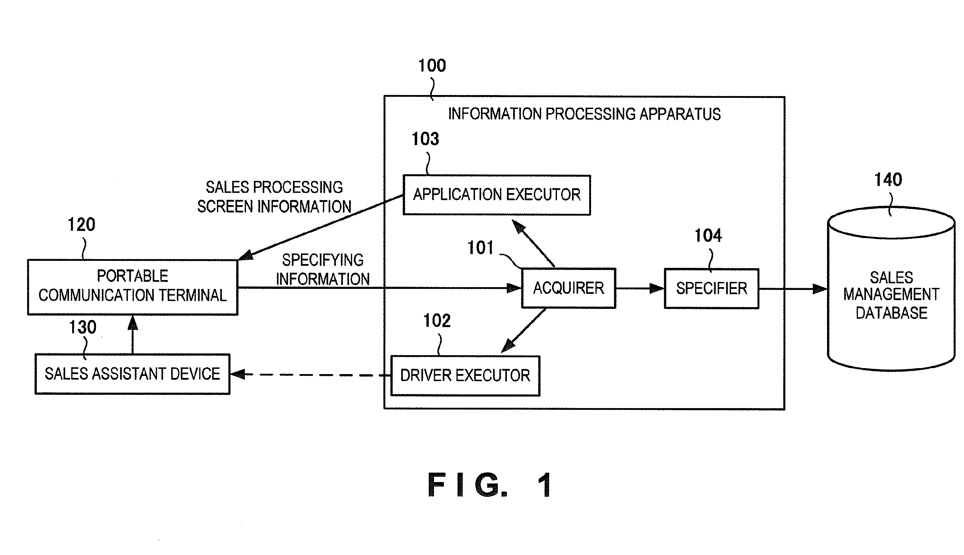

An information processing apparatus 100 according to the first embodiment of the present invention will be described with reference to Fig. 1. As shown in Fig. 1, the information processing apparatus 100 includes an acquirer 101, a driver executor 102, an application executor 103, and a specifier 104.

When a sales assistant device 130 is connected to a portable communication terminal 120, the acquirer 101 acquires, via the portable communication terminal 120, specifying information for specifying the sales assistant device 130.

The driver executor 102 executes a driver program corresponding to the specifying information, and controls the sales assistant device 130.

The application executor 103 executes a sales management application program corresponding to the specifying information, and transmits sales processing screen information to the portable communication terminal 120.

Further, the specifier 104 specifies, based on the specifying information, a sales management database in which sales-related information acquired under the control of the sales assistant device 130 should be accumulated.

With the above arrangement, the information processing apparatus controls the sales assistant device connected to the portable communication terminal. Also, a sales management application corresponding to the sales assistant device is executed to accumulate sales-related information acquired from the sales assistant device in a sales management database corresponding to the sales assistant device. By linking the sales management database with an existing POS system, a synchronized terminal can be easily introduced.

### [Second Embodiment]

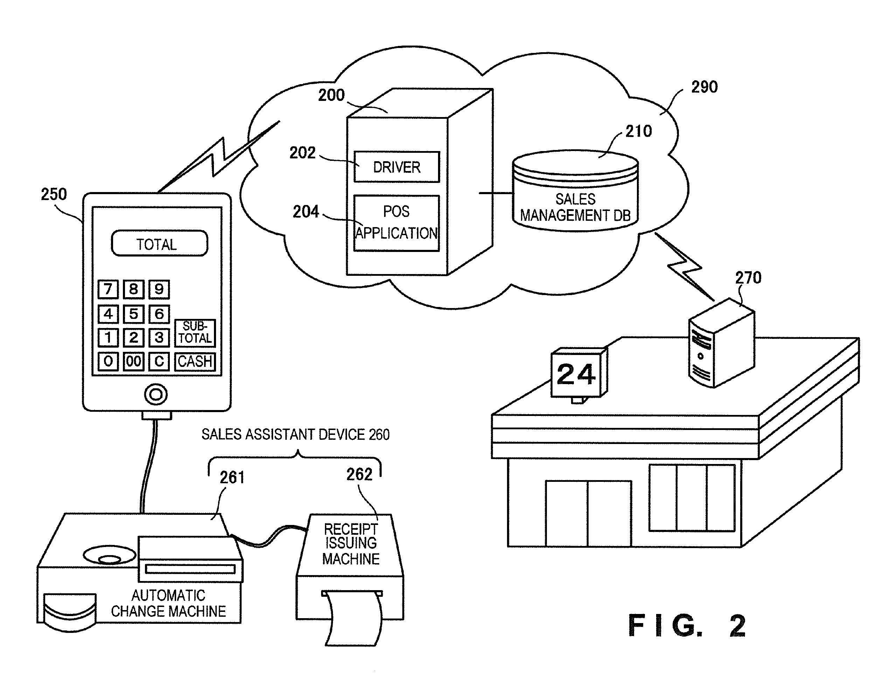

A cloud server 200 as an information processing apparatus according to the second embodiment of the present invention will be described next with reference to Figs. 2 to 11.

### (Overall Arrangement)

Fig. 2 is a view for explaining a sales management system as a kind of information processing system including the cloud server 200 according to this embodiment.

This sales management system includes the cloud server 200 prepared in a network 290, and a smart device 250 serving as a portable communication terminal capable of communicating with the cloud server 200 via a wireless communication network. The cloud server 200 is also connected to an in-store POS terminal 270 so as to be communicable with the POS terminal 270. This embodiment assumes that an automatic change machine 261 and a receipt issuing machine 262 are connected as a sales assistant device 260 to the smart device 250. However, the sales assistant device 260 is not limited to them, and is a concept including any hardware used in merchandise sales, such as a barcode reader or a credit card settlement machine.

The wireless communication network may be a mobile phone communication network or a network using a wireless communication interface (for example, wireless communication standard IEEE801.11ac or IEEE802.11 series (IEEE802.11a, b, c, d, e)). The smart device 250 is connected to the sales assistant device 260 via a USB (Universal Serial Bus) interface. However, the present invention is not limited to this, and the smart device 250 may be connected to be communicable via another data communication interface (for example, IEEE1394, HDMI®, Bluetooth®, or Wi-Fi®).

The cloud server 200 specifies the sales assistant device 260 connected to the smart device 250, and executes a driver program 202 and POS application 204 corresponding to the sales assistant device 260. Then, the smart device 250 displays a display screen as shown in Fig. 2, and enables input of a sales price and the like. By executing the driver program 202, the cloud server 200 acquires sales-related information from the sales assistant device 260. Since the sales assistant device 260 includes the automatic change machine 261, the sales-related information contains information about money inserted into the automatic change machine 261 and a paid change. This sales-related information is accumulated in a sales management database 210 specified in accordance with the sales assistant device 260. The association between the sales assistant device 260 and the sales management database 210 is registered in advance. These pieces of information are also associated with the in-store POS terminal 270.

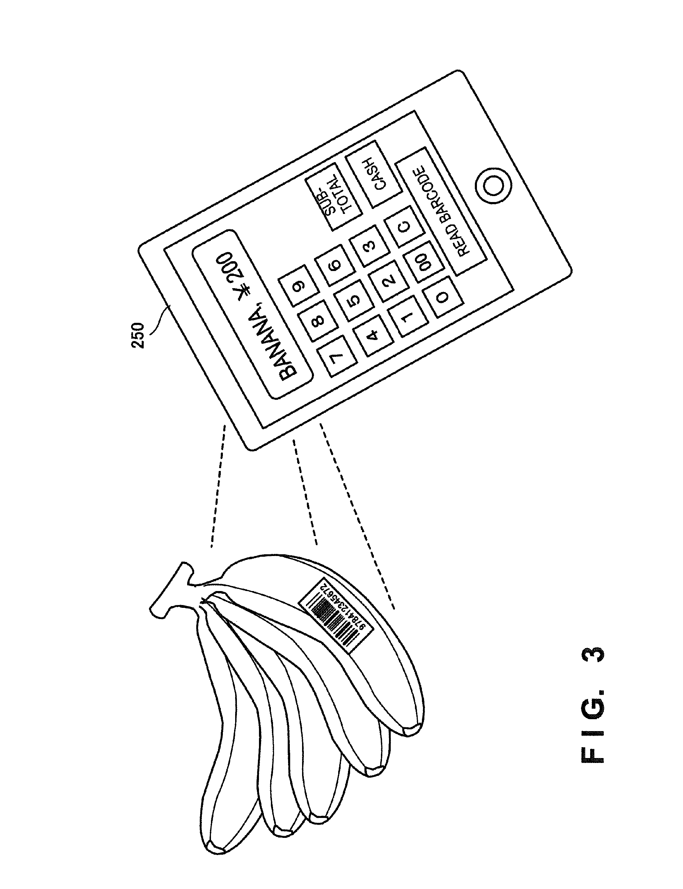

When a barcode attached to merchandise is read with the built-in camera of the smart device 250, as shown in Fig. 3, the barcode information is sent to the cloud server 200, and the smart device 250 can easily acquire a merchandise name and merchandise price as a reply.

In this manner, by only connecting the automatic change machine 261 and the receipt issuing machine 262, which are prepared in the store, to the smart device 250, the in-store POS terminal 270 can easily register sales-related information and sales information in the originally used sales management database 210. That is, the smart device 250 can be easily introduced or added as a new POS terminal. Further, if the sales assistant device 260 is brought out of the store and connected to the smart device 250, the POS system can be easily built at a temporary remote place such as a summer festival or a school festival.

### (Functional Arrangement of Cloud Server)

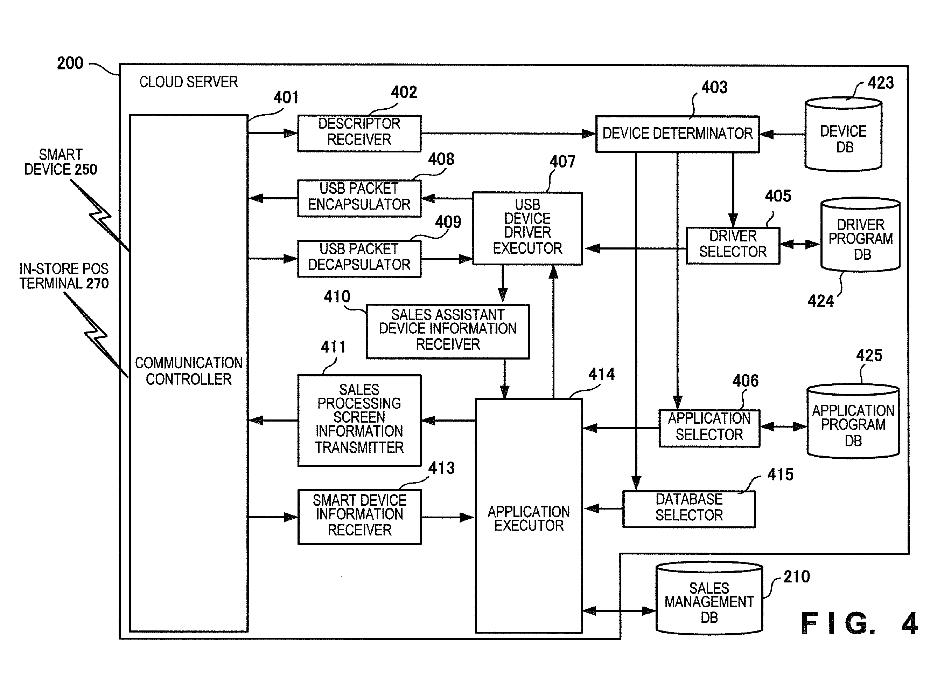

Fig. 4 is a block diagram showing the functional arrangement of the cloud server 200. The cloud server 200 includes a descriptor receiver 402. When the sales assistant device 260 is connected to the smart device 250, the descriptor receiver 402 acquires, via the smart device 250, a descriptor as specifying information for specifying the sales assistant device 260.

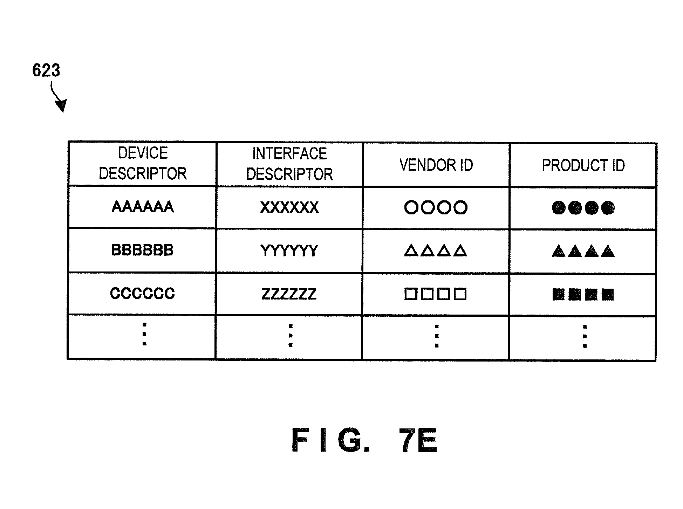

A device determinator 403 searches a device database 423 (see Fig. 7E) by using the descriptor acquired by the descriptor receiver 402, and can specify the manufacturer ID and product ID of the sales assistant device 260.

A USB device driver executor 407 executes a device driver corresponding to the descriptor, and controls the sales assistant device 260. A plurality of types of driver programs are prepared in a driver program database 424. By using the manufacturer ID and product ID determined by the device determinator 403, a driver selector 405 selects, from the driver program database 424, a device driver necessary to drive the specified sales assistant device 260.

The USB device driver executor 407 generates a USB packet to be transmitted to the sales assistant device 260 connected via the smart device 250, and transfers it to a USB packet encapsulator 408. The USB packet encapsulator 408 performs IP encapsulation of the USB packet and transmits the USB packet to the smart device 250. A USB packet decapsulator 409 receives data transmitted from the smart device 250 upon IP encapsulation, and decapsulates the data to extract a USB packet. The USB device driver executor 407 analyzes the received USB packet, generates a new USB packet, responds to the sales assistant device 260, and reports the status of the sales assistant device 260 to the application executor 414.

When the USB device driver executor 407 executes an appropriate device driver, a sales assistant device information receiver 410 receives sales-related information from the sales assistant device 260 via the smart device 250.

An application executor 414 executes a sales management application program corresponding to the sales assistant device 260 having the manufacturer ID and product ID specified by the descriptor. Based on the manufacturer ID and product ID determined by the device determinator 403, an application selector 406 selects, from an application program database 425, a virtual application that should be virtually executed in the smart device 250. The application executor 414 transmits sales processing screen information to the smart device 250 via a sales processing screen information transmitter 411 and a communication controller 401. The smart device 250 displays the display screen of a different application program in accordance with the type of the connected sales assistant device 260.

A database selector 415 specifies, based on the descriptor, the sales management database 210 in which sales-related information acquired under the control of the sales assistant device 260 should be accumulated.

The application executor 414 accumulates sales-related information in the sales management database 210 specified by the database selector 415.

The application executor 414 acquires, via a smart device information receiver 413, sales information input to the smart device 250, and accumulates the sales information in the sales management database 210 specified by the database selector 415.

Further, the application executor 414 receives barcode information read by using the built-in camera of the smart device 250, as shown in Fig. 3, thereby acquiring sales information. This sales information contains merchandise information (merchandise category, merchandise name, and price) derived from the barcode information.

Also, the application executor 414 acquires the position information and time information of the smart device 250 at the time of sales from the smart device 250 via the smart device information receiver 413, and accumulates them in the sales management database 210 together with the sales-related information.

### (Functional Arrangement of Smart Device)

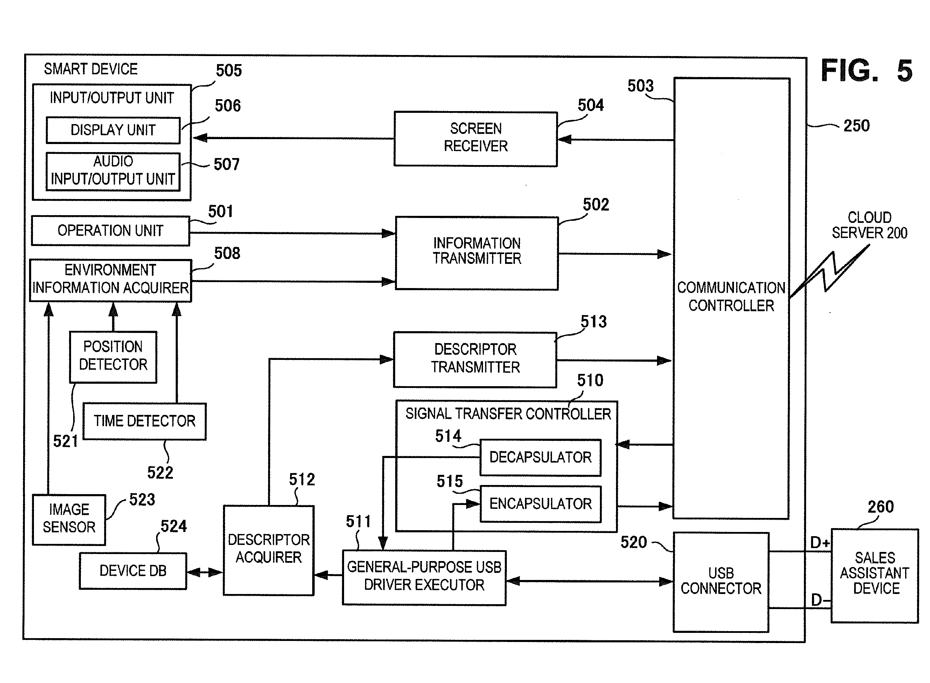

The functional arrangement of the smart device 250 will be explained with reference to Fig. 5. The smart device 250 includes an operation unit 501 that accepts instructions and inputs from a user, and an information transmitter 502 that transmits the accepted instruction information and input information. The smart device 250 also includes a communication controller 503, and controls exchange with a network.

The smart device 250 also includes, as an input/output unit 505, a display unit 506 such as a display, and an audio input/output unit 507 such as a microphone or a loudspeaker. A screen receiver 504 receives audio information and image information via the communication controller 503, and performs image output to the display unit 506 and audio output from the audio input/output unit 507.

Further, the smart device 250 includes an environment information acquirer 508, a position detector 521, an image sensor 523, and a time detector 522. Position information detected by the position detector 521 by using the GPS or the like, time information detected by the time detector 522 such as a digital timepiece, image information captured with the image sensor 523, and the like are sent as environment information to the environment information acquirer 508. The environment information acquired by the environment information acquirer 508 is transmitted to the cloud server 200 via the information transmitter 502 and the communication controller 503.

Further, the smart device 250 includes a USB connector 520 and a general-purpose USB driver executor 511. A descriptor acquirer 512 is configured to be able to acquire a minimum descriptor from a connected USB device. The acquired descriptor is transferred to a descriptor transmitter 513 and transmitted to the cloud server 200 via the communication controller 503.

The smart device 250 further includes a decapsulator 514 and an encapsulator 515. At the time of communication with the cloud server 200, the decapsulator 514 and the encapsulator 515 perform decapsulation processing and encapsulation processing on USB packets that are exchanged with the cloud server 200.

The decapsulator 514 and the encapsulator 515 function as a signal transfer controller 519. That is, the signal transfer controller 519 controls signal transfer between the sales assistant device 260 and the cloud server 200.

The smart device 250 stores a device database 524 representing the correspondence between a device descriptor, an interface descriptor, a vendor ID, and a product ID for a device whose device driver is installed in the local terminal. The device database 524 has a structure as shown in Fig. 7E.

When the sales assistant device 260 is connected, the smart device 250 compares a device descriptor notified from the sales assistant device 260 with a device descriptor in the device database 524. If the device descriptor notified from the sales assistant device 260 coincides with a device descriptor in the device database 524, the smart device 250 determines that the sales assistant device 260 is a device processable by the local terminal. If these device descriptors do not coincide with each other, the smart device 250 determines that the sales assistant device 260 is a device unprocessable by the local terminal.

Note that a vendor ID and product ID in a device descriptor notified from the sales assistant device 260 may be extracted and compared with a vendor ID and product ID in the device database. In this case, if a coincident vendor ID and product ID exist in the device database 524, the smart device 250 can determine that the sales assistant device is processable by the local terminal. To the contrary, if neither the vendor ID nor the product ID is coincident, the smart device 250 can determine that the sales assistant device is unprocessable by the local terminal.

### (Processing Sequence of Overall System)

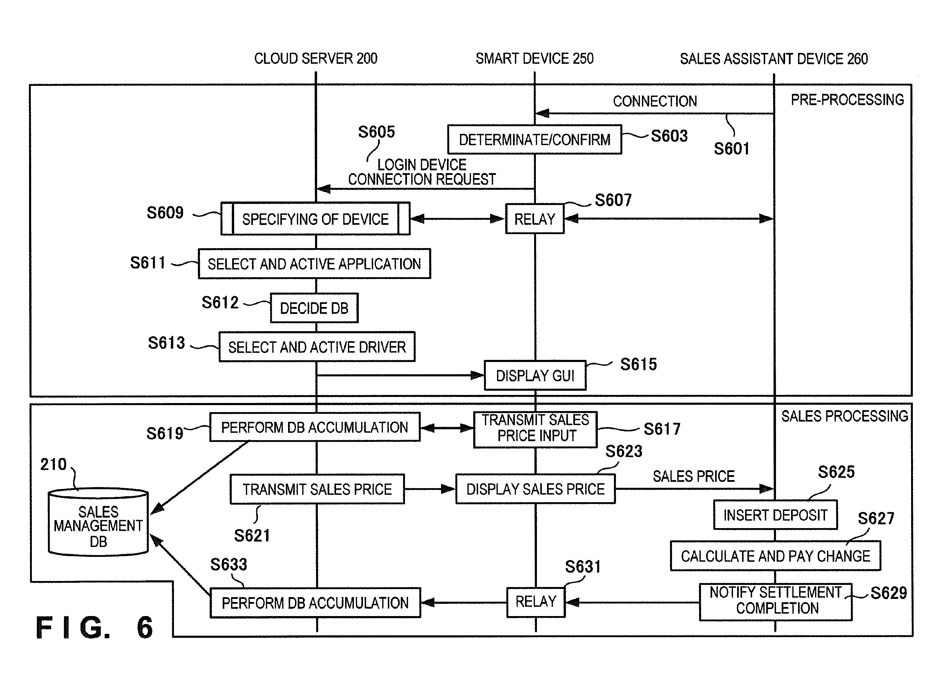

The processing sequence of the overall system will be summarized next with reference to a sequence chart shown in Fig. 6. First, the sales assistant device 260 is connected to the smart device 250 (S601). In response to this, the general-purpose USB driver executor 511 and descriptor acquirer 512 of the smart device 250 determine whether the local terminal includes a driver program and the like for acquiring sales-related information from the sales assistant device 260 (S603).

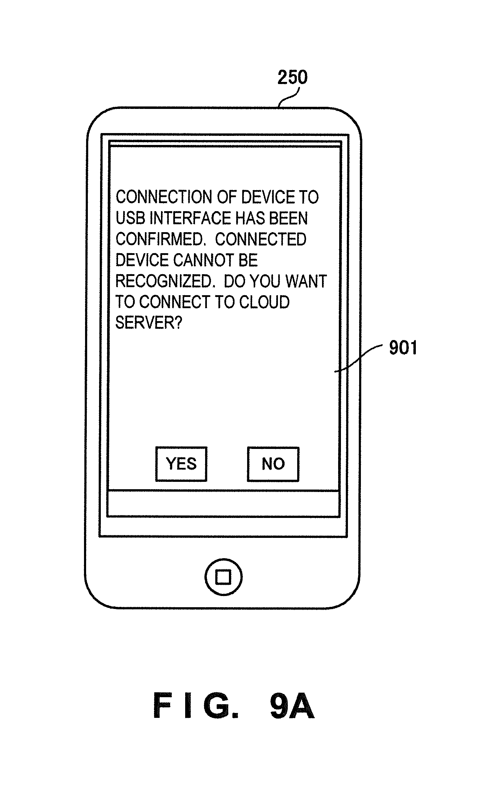

The capacity of the smart device 250 does not suffice for downloading and installing the driver programs and application programs of various kinds of sales assistant devices 260. For this reason, the general-purpose USB driver executor 511 displays a connection confirmation screen 901 as shown in Fig. 9A to prompt the user to make a confirmation. In accordance with an instruction from the user, the cloud server 200 is logged in from the smart device 250. Further, the smart device 250 transmits a descriptor to the cloud server 200 by using the descriptor transmitter 513, and requests to acquire sales-related information from the sales assistant device 260 under the initiative of the cloud server 200 (S605). However, the user of the smart device 250 needs to be a member of a cloud provider who runs the cloud server 200.

The cloud server 200 specifies the sales assistant device 260 through exchange with the sales assistant device 260 via the smart device 250 (S607), and specifies the sales assistant device 260 (S609). Then, the cloud server 200 selects and activates a sales management application program corresponding to the sales assistant device 260 (S611).

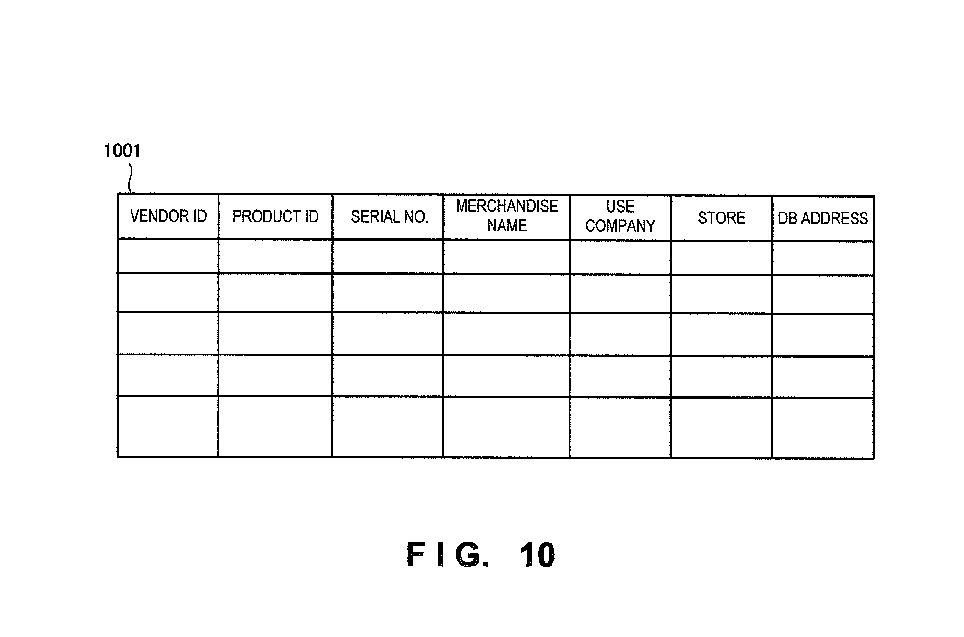

The database selector 415 decides a sales management database corresponding to the connected sales assistant device 260 by using a correspondence table 1001 as shown in Fig. 10 (S612). In the correspondence table 1001, information for specifying the sales assistant device 260 is associated with a company and store that should manage the sales assistant device 260, and is also associated with the address of a database in which data from the sales assistant device 260 should be registered. Hence, when the sales assistant device 260 is specified, a database in which sales-related information acquired by using the sales assistant device 260 should be saved is determined. The user need not perform cumbersome work such as store selection. By only connecting the sales assistant device 260 to the smart device, the same data flow as in the use of the sales assistant device 260 in the in-store POS terminal 270 can be easily implemented.

The cloud server 200 selects a driver corresponding to the device specified in step S609 from the driver program database 424, and drives the driver (S613). Accordingly, the cloud server 200 can access the sales assistant device 260 via the smart device 250.

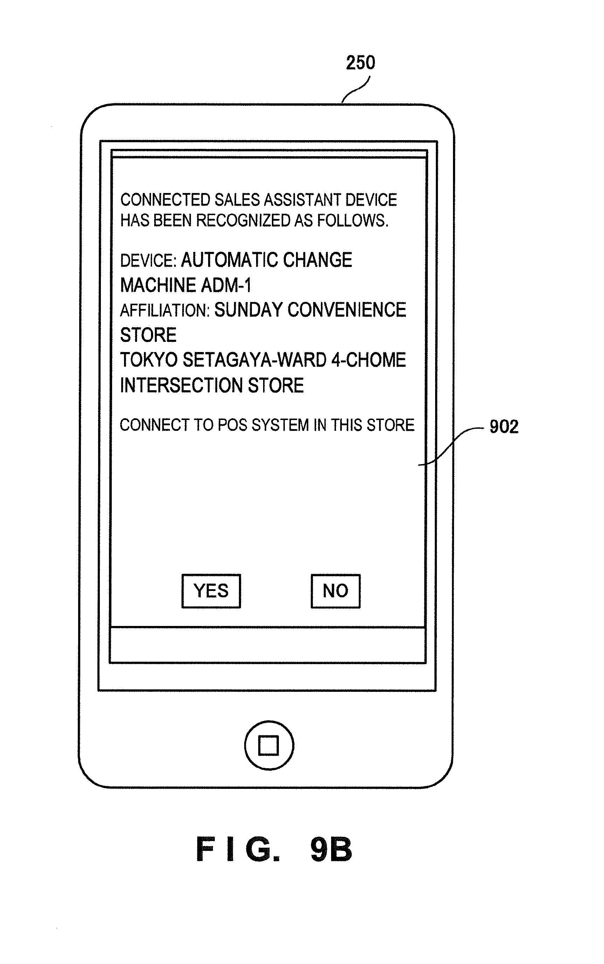

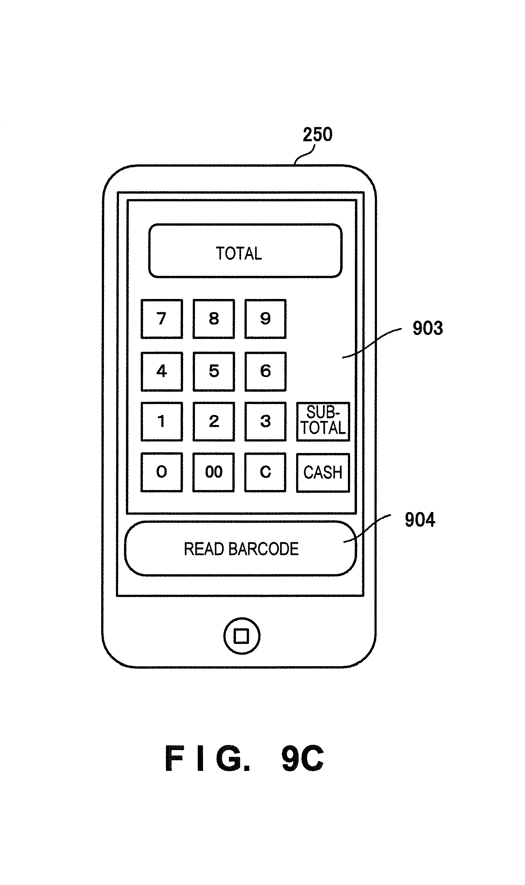

The sales management application program first displays a confirmation screen 902 of the sales assistant device 260 as shown in Fig. 9B on the display unit 506 of the smart device 250, and prompts the user to confirm the sales assistant device 260 connected to the smart device 250. If there is no problem, the sales management application program further displays a sales processing screen 903 as shown in Fig. 9C (S615). At this time, the sales management application program may determine whether the sales assistant device 260 connected to the smart device 250 is the same as a device requested to be connected in advance (device which needs to be connected in a store). When a device different from a predetermined device is connected, the sales management application program may notify the smart device 250 by a predetermined screen or sound of a device which should be originally connected. That is, the store side can guide the user to connect a desired sales assistant device to the smart device 250.

The above-described processing is pre-processing, and then the process shifts to sales processing to be performed in every merchandise sales work. The operator of the smart device 250 inputs an amount of money and a quantity from the sales processing screen 903 as shown in Fig. 9C, or selects a barcode reading button 904 to read a barcode with the camera, as shown in Fig. 3. The information transmitter 502 transmits sales price information and sales quantity information (barcode information in the case of barcode reading) to the cloud server 200 (S617). The smart device information receiver 413 of the cloud server 200 receives sales information including the sales price information and the sales quantity information, and transfers it to the application executor 414 to accumulate it in the specified sales management database 210 (S619).

The cloud server 200 may acquire information about the sales time and the sales location from the environment information acquirer 508 of the smart device 250 in accordance with the sales price. The information transmitter 502 transmits these pieces of information to the cloud server 200 together with the same ID as the sales price. As a result, the sales time, sales location, sales price, sales quantity, and the like can be accumulated in the sales management database 210 in association with each other.

Then, the cloud server 200 displays the sales price on the display unit 506 of the smart device 250 via the sales processing screen information transmitter 411. At the same time, the USB packet encapsulator 408 encapsulates the sales price in a USB packet and transmits it to the sales assistant device 260. The automatic change machine 261 of the sales assistant device 260 receives the sales price and waits for insertion of a deposit. After the deposit is inserted (S625), the automatic change machine 261 subtracts the sales price from the deposit to calculate a change, and pays the change (S627). After that, a settlement completion notification is output from the sales assistant device 260 (S629), relayed by the smart device 250 (S631), and transfers it to the cloud server 200. Since this notification is a USB packet, the smart device 250 performs IP encapsulation of the USB packet by using the encapsulator 515 and transmits the USB packet to the cloud server 200. In the cloud server 200, the USB packet decapsulator 409 decapsulates the IP packet to extract the USB packet, and extracts the settlement completion notification from the USB packet. The extracted settlement completion notification is transferred to the application executor 414 and accumulated in the sales management database 210 (S633).

The series of processes in steps S617 to S633 are sales processing. This sales processing is repeated in every merchandise sales work to a customer.

By the series of processes, the cloud server 200 can accumulate sales processing results.

### (Processing Sequence in Cloud Server 200)

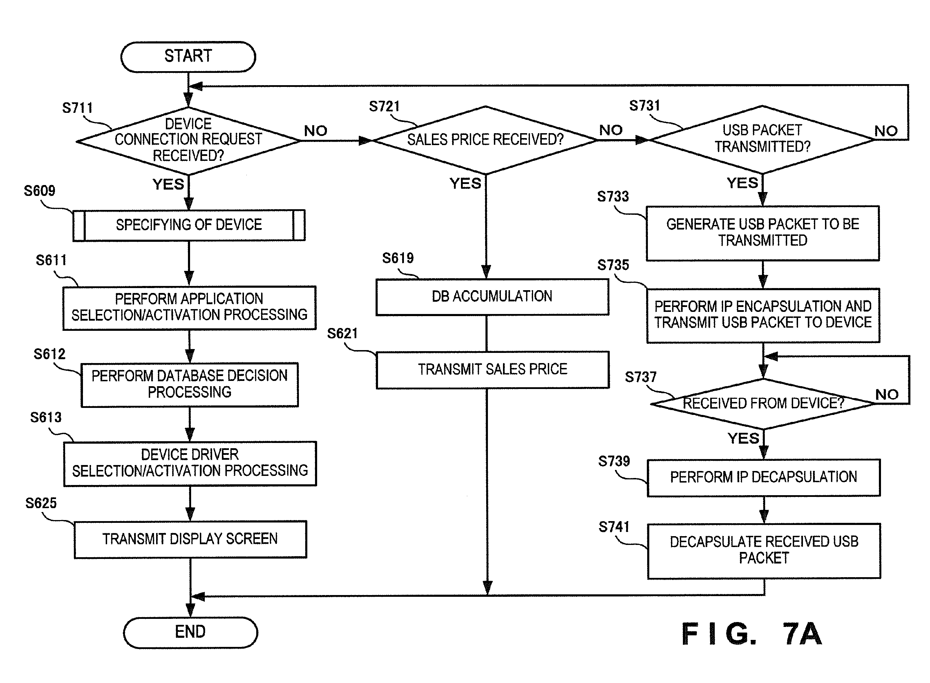

A more detailed processing sequence in the cloud server 200 will be explained with reference to Fig. 7A. If the cloud server 200 determines in step S711 that it has received a device connection request from the smart device 250, it advances to step S609 to perform device specifying processing. In step S611, the cloud server 200 selects a sales management application program based on the specified device, and activates it, as described above. Further, the cloud server 200 specifies a database in step S612, and selects and activates a device driver in step S613. The cloud server 200 transmits a predetermined display screen to the smart device 250 along with execution of the sales management application program (S625). If the cloud server 200 determines in step S711 that it has not received a device connection request from the smart device 250, it advances to step S721.

If the cloud server 200 determines in step S721 that it has received sales price information, it performs accumulation processing in the database in step S619. In step S621, the cloud server 200 transmits a sales price display screen to the smart device 250, and transmits the sales price information to the sales assistant device 260 via the smart device 250. If the cloud server 200 determines in step S721 that it has not received sales price information, it advances to step S731.

If the cloud server 200 determines in step S731 to transmit a USB packet, it advances to step S733 to generate a USB packet to be transmitted, and to step S735 to perform IP encapsulation and transmit the USB packet to the device. After that, the cloud server 200 waits for reception of a USB packet from the device (S737), and if it receives a USB packet, performs IP decapsulation (S739) and processes the received USB packet (S741). By the processes of steps S731 to S741, the cloud server 200 can receive desired information from the sales assistant device 260 via the smart device 250.

### <Descriptor Acquisition Method>

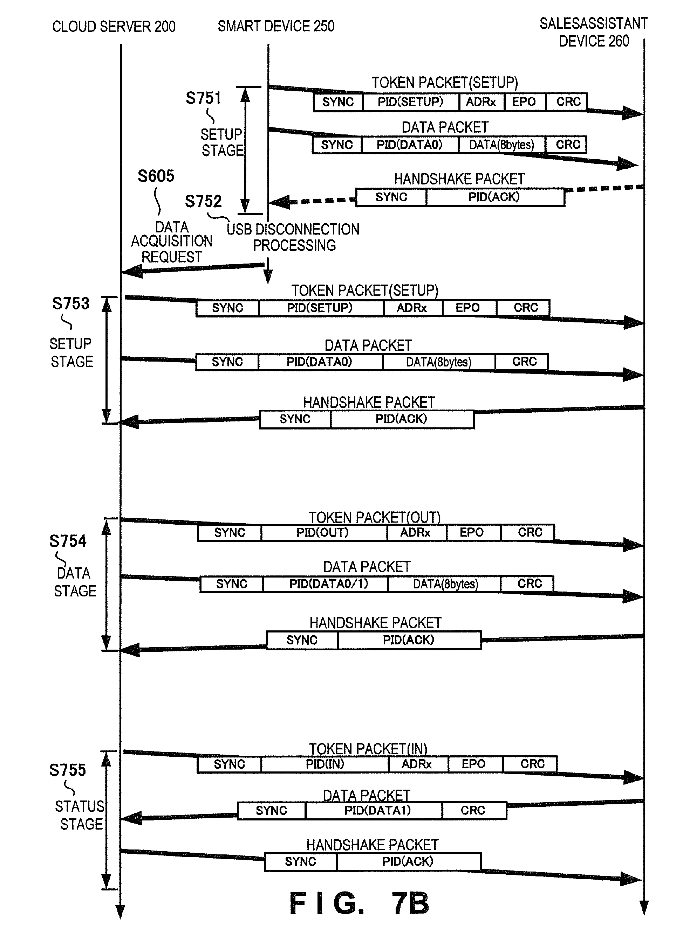

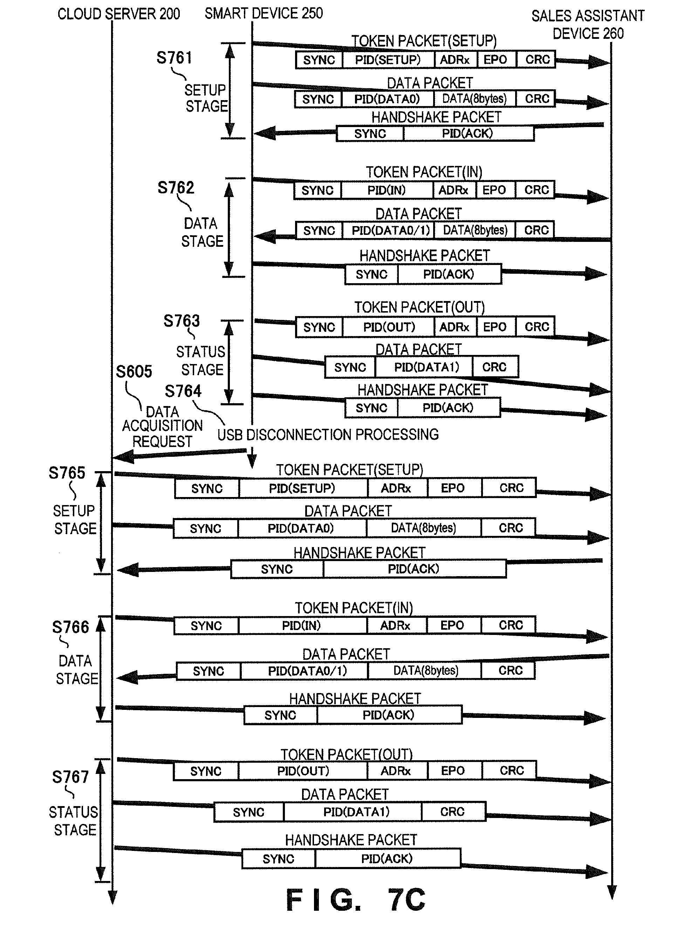

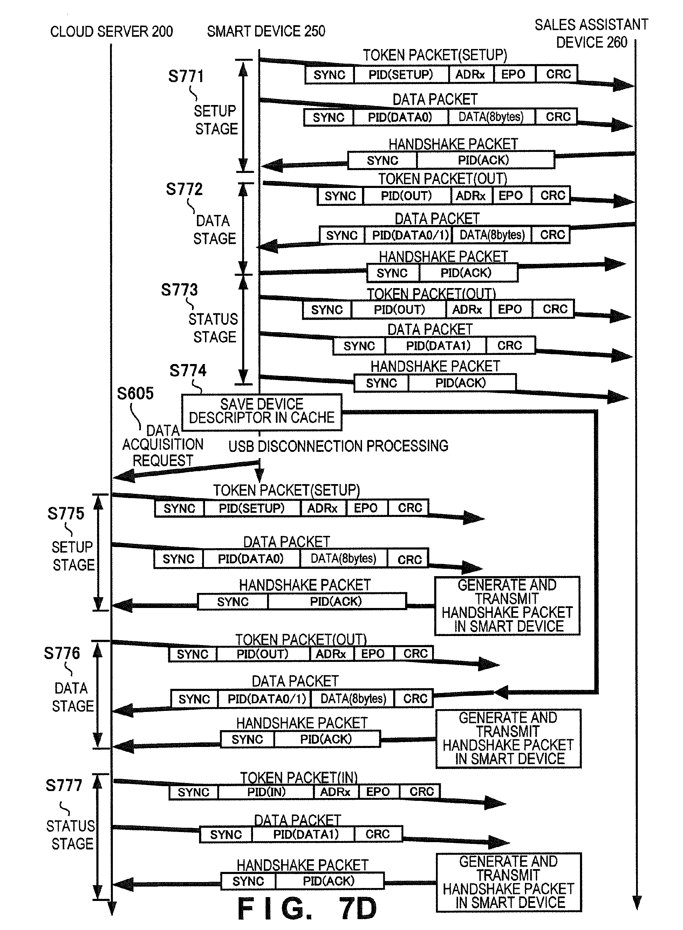

Figs. 7B, 7C, and 7D are charts for explaining in more detail the device specifying processing described in steps S601 to S609. These drawings show packet data exchanged between the cloud server 200, the smart device 250, and the sales assistant device 260.

In Fig. 7B, when the sales assistant device 260 is connected to the smart device 250, a token packet and a data packet are transmitted from the smart device 250 to the sales assistant device 260 in setup stage S751. In response to this, the sales assistant device 260 transmits a handshake packet to the smart device 250. Based on whether a proper handshake packet is returned, the smart device 250 can determine whether the local terminal can control the sales assistant device 260.

For example, if a device assumes in advance a connection to the smart device 250, a proper handshake packet is returned, and a data stage and a status stage continue. The device can be controlled by driving a device driver prepared in the smart device 250 in correspondence with the acquired device descriptor. However, very few devices assume a connection to the smart device 250. If no handshake packet is returned in setup stage S701, USB disconnection processing is performed (S752), and the smart device 250 transmits a data acquisition request to the cloud server 200 (S605).

Then, the cloud server 200 performs again setup stage S753 with the sales assistant device 260 via the smart device 250, and advances to data stage S754 to acquire device information such as a device descriptor. The cloud server 200 is equipped in advance with many drivers and data conversion modules so that it can be connected to various sales assistant devices 260 present in the world. Thus, setup stage S753, data stage S754, and status stage S755 smoothly proceed between the cloud server 200 and the sales assistant device 260, and communication with the sales assistant device 260 is established appropriately.

Fig. 7C shows a sequence in a case in which the sales assistant device 260 sends back a handshake packet, but the smart device 250 does not have a driver corresponding to a device descriptor acquired from the sales assistant device 260. In this case, setup stage S761, data stage S762, and status stage S763 are performed between the smart device 250 and the sales assistant device 260. If it is determined that the smart device 250 does not have a device driver corresponding to a device descriptor acquired through these three stages, USB disconnection processing S764 is performed. Then, the smart device 250 transmits a data acquisition request to the cloud server 200 (S605).

The smart device 250 requests the cloud server 200 to establish communication with the sales assistant device 260. After the USB connection between the smart device 250 and the sales assistant device 260 is disconnected, the cloud server 200 performs again setup stage S765, data stage S766, and status stage S767. As a result, the cloud server 200 can directly acquire a device descriptor from the sales assistant device 260, and drive a driver corresponding to the device.

Fig. 7D shows processing when a device descriptor acquired in setup stage S771 and data stage S772 between the smart device 250 and the sales assistant device 260 is cached in the smart device 250. Before performing USB disconnection processing, the acquired device descriptor is cached in the smart device 250 (S774). The smart device 250 transmits a data acquisition request to the cloud server 200 (S605).

After the connection between the smart device 250 and the sales assistant device 260 is temporarily disconnected, communication establishment processing with the sales assistant device 260 starts under the initiative of the cloud server 200 (S775 to S777). In this case, in setup stage S775, the smart device 250 generates a handshake packet and transmits it to the cloud server 200 without transmitting a setup token packet and a data packet to the sales assistant device 260. In data stage S776, the smart device 250 receives a token packet and a data packet from the cloud server 200. The smart device 250 reads out the device descriptor from the cache and transmits it to the cloud server 200 without transmitting these packets to the sales assistant device 260. Since processing of acquiring a device descriptor from the sales assistant device 260 can be omitted, the process can efficiently restart after communication disconnection from the sales assistant device 260.

### (Device Specifying Table)

As in the device database 524 as shown in Fig. 7E, the device database 423 stores the correspondence between a device descriptor, an interface descriptor, a vendor ID, and a product ID.

When the sales assistant device 260 is connected to the smart device 250, the cloud server 200 searches the device database 423 for a device descriptor acquired from the sales assistant device 260 via the smart device 250, and specifies a corresponding vendor ID and product ID. The cloud server 200 selects a device driver corresponding to the vendor ID and product ID from the driver program database 424, and executes it.

Note that the device database 423 stores the correspondence between a device descriptor, an interface descriptor, a vendor ID, and a product ID, but the present invention is not limited to this. For example, the device database 423 may further store the correspondence between a device descriptor and a merchandise name. In this case, a merchandise name in the sales assistant device 260 may be specified from the device descriptor by using the device database 423, and displayed on the screen of the smart device 250. The user of the smart device 250 can confirm that "the cloud server 200 has recognized the sales assistant device 260 connected by him", and can feel greatly assured.

### (USB Connection Processing)

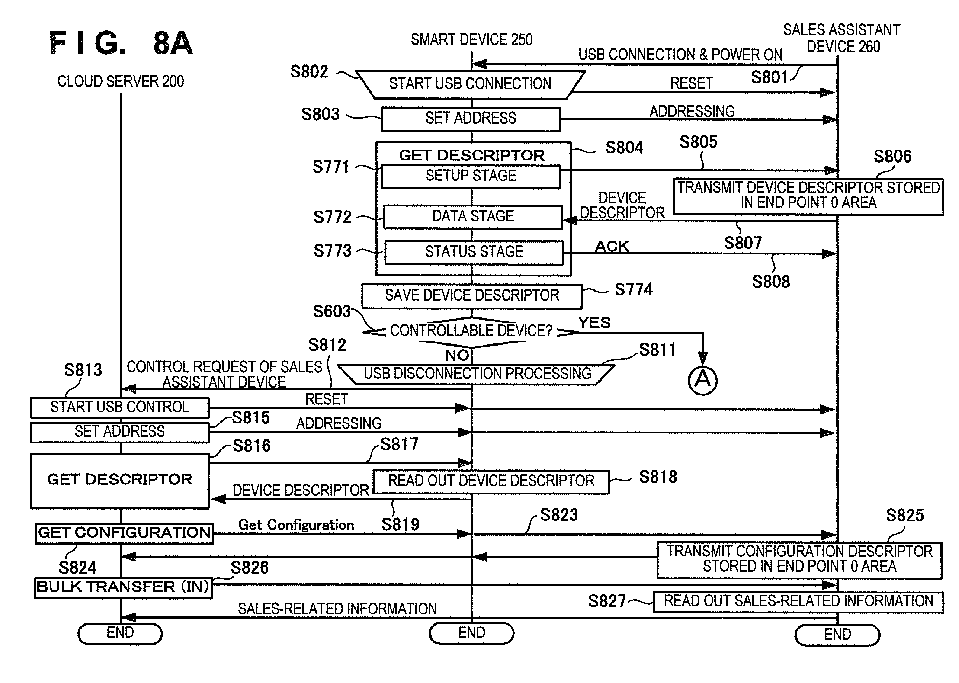

Signals to be exchanged between the cloud server 200, the smart device 250, and the sales assistant device 260 until USB communication is established will be explained in more detail with reference to Figs. 8A to 8D. Particularly, an example in which a device descriptor is saved in the cache, as described with reference to Fig. 7D, will be explained.

In step S801, the sales assistant device 260 is connected to the smart device 250 and turned on. In step S802, the smart device 250 starts USB connection processing to the sales assistant device 260, and transmits a reset signal. In step S803, the smart device 250 designates an address to the sales assistant device 260. This address is added to packets to be subsequently exchanged between the smart device 250 and the sales assistant device 260.

In step S804, the smart device 250 performs "GET DESCRIPTOR" processing to acquire a descriptor from the sales assistant device 260. The "GET DESCRIPTOR" processing is the same as that in steps S721 to S723 described with reference to Fig. 7D, and thus is not explained in detail. After the smart device 250 transmits a descriptor request to the sales assistant device 260 (S805), the sales assistant device 260 transmits, to the smart device 250, a device descriptor stored in an end point 0 area (S806 and S807). In status stage S723, the smart device 250 transmits an acknowledge signal (ACK) to the sales assistant device 260.

Upon acquiring the device descriptor, the smart device 250 saves it in the cache (S774). By using the device descriptor, the smart device 250 determines whether it can control the device (S603). If the smart device 250 determines that it cannot control the device, it advances to step S811 to perform USB disconnection processing. At the same time, the smart device 250 requests the cloud server 200 to control the sales assistant device 260 (S812).

In step S813, the cloud server 200 starts processing to control the sales assistant device 260, and transmits a reset signal to the sales assistant device 260 via the smart device 250. In step S815, the cloud server 200 performs SET ADDRESS and designates an address to the sales assistant device 260.

Further, the cloud server 200 performs GET DESCRIPTOR (S816) and GET CONFIGURATION (S824) to the sales assistant device 260 via the smart device 250 (S823). More specifically, in step S817, the cloud server 200 sends a get descriptor to the smart device 250. In step S818, the smart device 250 reads out the device descriptor saved in the cache, and transmits it to the cloud server 200 (S819).

In step S825, the sales assistant device 260 transmits a configuration descriptor stored in the end point 0 area. Then, the cloud server 200 performs BULK TRANSFER to the sales assistant device 260 via the smart device 250 (S826). Then, the sales assistant device 260 reads out sales-related information (S827), and transmits it to the cloud server 200 via the smart device 250.

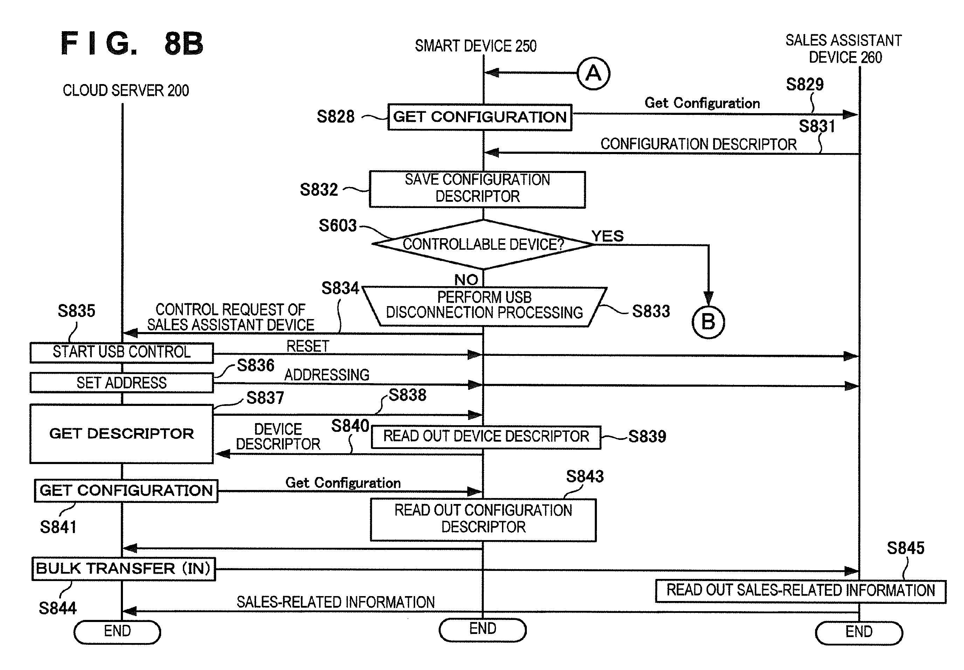

If the smart device 250 determines in step S603 based on the device descriptor of the sales assistant device 260 that the sales assistant device 260 is not a controllable device, it advances to step S828 of Fig. 8B. In steps S828 and S829, configuration descriptor acquisition processing is performed. In response to this, the sales assistant device 260 transmits the configuration descriptor to the smart device 250. In step S832, the smart device 250 saves the acquired configuration descriptor in the cache. In step S603, the smart device 250 determines based on the configuration descriptor whether the sales assistant device 260 is a device controllable by the smart device 250. If the smart device 250 determines that the sales assistant device 260 is not controllable, it advances to step S833 to disconnect the USB connection between the smart device 250 and the sales assistant device 260.

After the USB connection is disconnected, the smart device 250 requests the cloud server 200 to control the sales assistant device 260. In response to this control request, the cloud server 200 starts USB control, and transmits a reset signal to the sales assistant device 260 via the smart device 250 (S835). Subsequently, the cloud server 200 performs SET ADDRESS (S836), and designates an address to the sales assistant device 260. Further, the cloud server 200 requests a descriptor of the smart device 250 by GET DESCRIPTOR (S837). The smart device 250 reads out the device descriptor from the cache (S839), and sends it back to the cloud server 200 (S840), instead of relaying the request to the sales assistant device 260.

Further, the cloud server 200 executes GET CONFIGURATION to the sales assistant device 260 via the smart device 250 (S841). The smart device 250 reads out the configuration descriptor stored in the cache, and transmits it to the cloud server 200 (S843), instead of transmitting the command to the sales assistant device 260. Then, the cloud server 200 performs BULK TRANSFER to the sales assistant device 260 via the smart device 250 (S844). The sales assistant device 260 reads out sales-related information (S845), and transmits it to the cloud server 200 via the smart device 250.

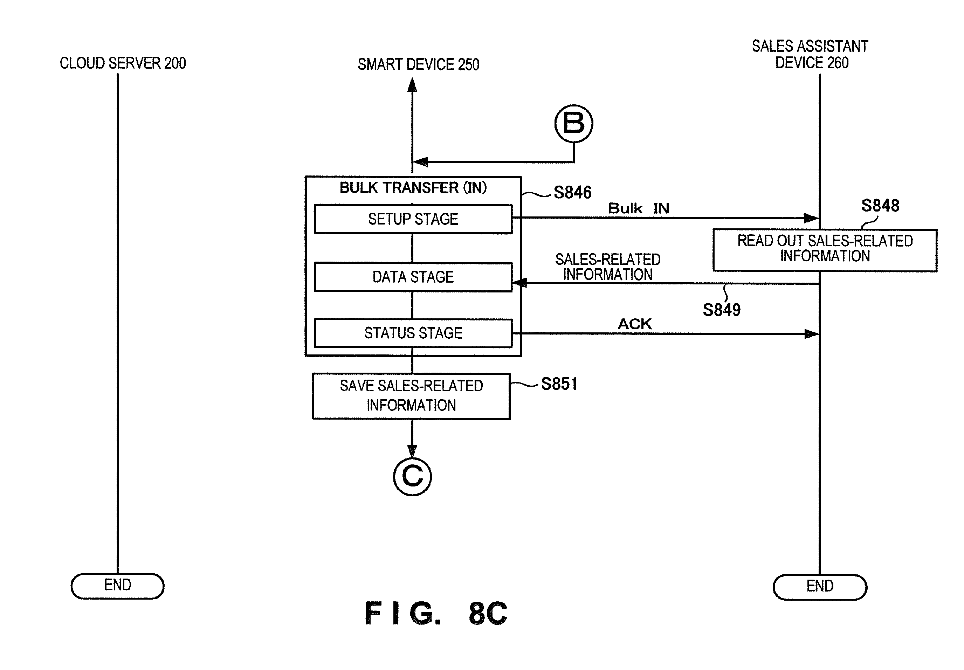

If the smart device 250 determines in step S505 based on the configuration descriptor that the sales assistant device 260 is a controllable device (B), it advances to BULK TRANSFER in step S846 of Fig. 8C. Even in BULK TRANSFER, the setup stage, the data stage, and the status stage are performed to read out sales-related information from the sales assistant device 260 and transmit it to the smart device 250 (S849).

Upon receiving the readout sales-related information, the smart device 250 saves it in the cache (S851), and determines whether there is a sales management application capable of performing display processing on the sales-related information (S852).

If the smart device 250 determines that the sales-related information is processable, it advances to step S853 to continue the processing without accessing the cloud server 200. In this case, the smart device 250 can directly reproduce the sales-related information of the sales assistant device 260.

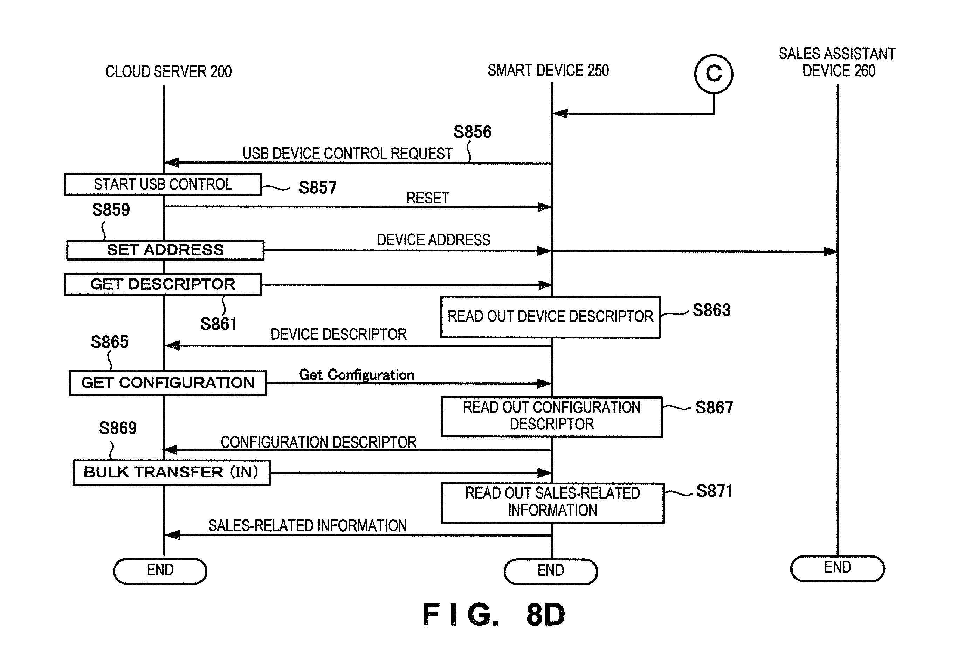

If the smart device 250 does not have a sales management application capable of processing the sales-related information of the sales assistant device 260, it advances to step S854 to perform disconnection processing of the USB connection, and further advances to step S856 of Fig. 8D.

In step S856 of Fig. 8D, the smart device 250 requests USB device control of the cloud server 200. The smart device 250 requests the cloud server 200 to control the sales assistant device 260. The cloud server 200 starts USB control in response to this control request, and transmits a reset signal to the sales assistant device 260 via the smart device 250 (S857). Then, the cloud server 200 performs SET ADDRESS (S859), and designates an address to the sales assistant device 260. The cloud server 200 requests a descriptor of the smart device 250 by GET DESCRIPTOR (S861). The smart device 250 reads out the device descriptor from the cache (S863), and sends it back to the cloud server 200, instead of relaying the request to the sales assistant device 260.

Further, the cloud server 200 executes GET CONFIGURATION to the sales assistant device 260 via the smart device 250 (S865). The smart device 250 reads out the configuration descriptor saved in the cache, and relays and transmits it to the cloud server 200 (S867), instead of relaying the command.

The cloud server 200 performs BULK TRANSFER to the sales assistant device 260 via the smart device 250 (S869). The smart device 250 reads out the sales-related information saved in the cache (S871), and transmits it to the cloud server 200.

According to the above-described sequence, communication between the cloud server 200 and the sales assistant device 260 can be efficiently performed by appropriately using the cache of the smart device 250.

### (Display Screen)

Figs. 9A to 9C are views each showing an example of a screen displayed on the display unit 506 of the smart device 250, as described above. Fig. 9A shows the connection confirmation screen 901 to the cloud server 200. Fig. 9B shows the confirmation screen 902 of the sales assistant device 260. Fig. 9C shows the sales processing screen 903 and the barcode reading button 904.

### (Correspondence Table)

Fig. 10 is a table showing the structure of the correspondence table 1001 representing the correspondence between the sales assistant device 260 and the sales management database 210. In the correspondence table 1001, information (vendor ID, product ID, and serial No.) contained in the device descriptor of the sales assistant device 260 is associated with another specifying information (merchandise name), and a company and store that should manage the sales assistant device 260. Further, the specifying information of the sales assistant device 260 is associated with the address of a database in which data from the sales assistant device 260 should be registered.

### (Sales Management Database)

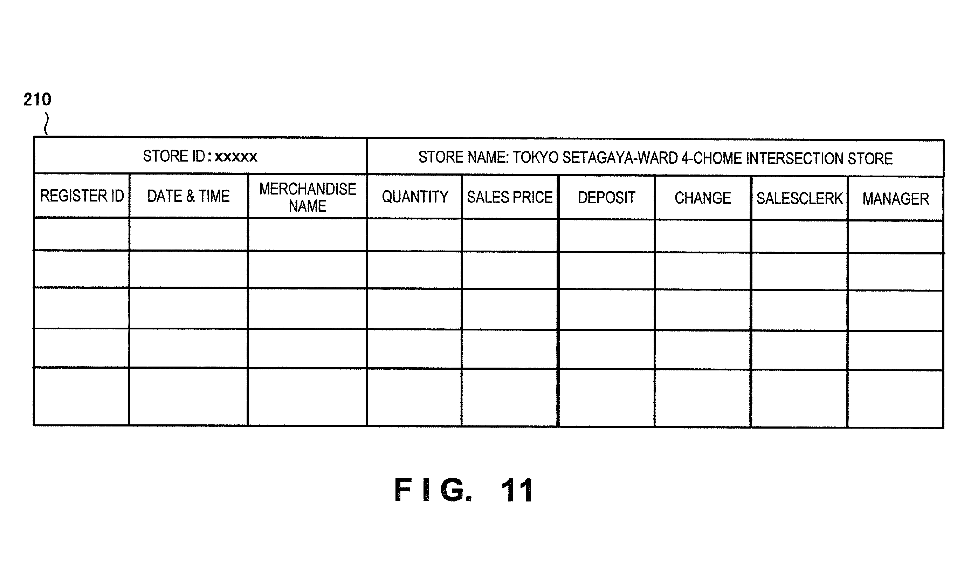

Fig. 11 is a view showing the structure of the sales management database 210. As shown in Fig. 11, the sales management database 210 is prepared for each store. The sales management database 210 is configured so that every time sales are done, the ID of a register used in the sales, the date & time, the merchandise name, the number of commodities, the sales price, the deposit, the change, the salesclerk, and the manager can be accumulated. The register ID is identification information of the automatic change machine 261 of the sales assistant device 260. The register ID, deposit, and change are acquired from the sales assistant device 260 via the smart device 250. The date & time, the merchandise name, the number of commodities, and the sales price are directly acquired from the smart device 250. As for the pieces of information about the salesclerk and the manager, those registered in advance in linkage with the register ID are called. The information about the salesclerk may be acquired from input information input by the salesclerk himself to the smart device 250.

As described above, according to this embodiment, when the sales assistant device 260 is specified, a database in which sales-related information acquired by using the sales assistant device 260 should be saved is determined. A salesclerk serving as a user need not perform cumbersome work such as store selection. By only connecting the sales assistant device 260 to the smart device, the same data flow as in the case of using the sales assistant device 260 by connecting it to the in-store POS terminal 270 can be easily implemented. That is, the POS system can be very easily built in a temporary store at a remote place by using the sales assistant device and the smart device. If it is configured to virtually execute the sales assistant device in the cloud server 200, sales data and the like are sent to the cloud server 200 and do not remain in the smart device. A system excellent in even information security can be built.

Note that a USB register keyboard may be connected to the smart device 250 to input a sales price and the like from the USB register keyboard.

### [Third Embodiment]

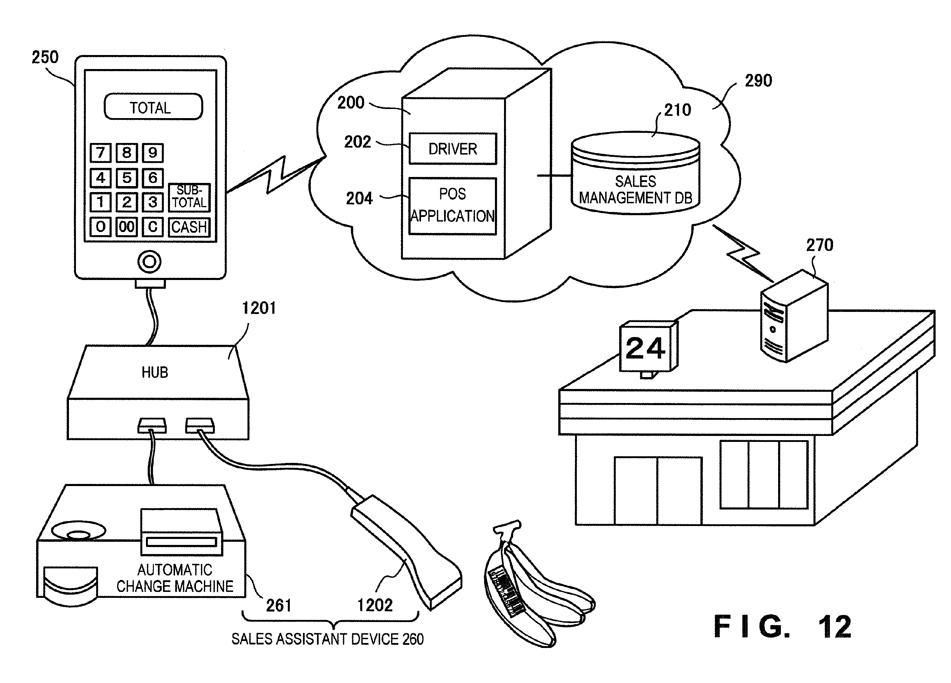

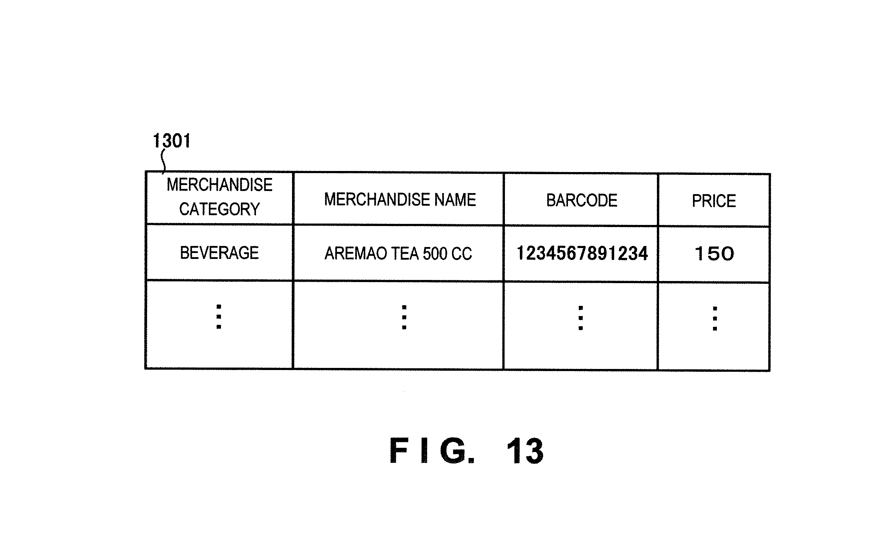

The third embodiment of the present invention will be described next with reference to Figs. 12 and 13. Fig. 12 is a view showing the arrangement of a system including a cloud server according to this embodiment. The arrangements of a cloud server 200 and smart device 250 are completely the same as those in the second embodiment. The third embodiment is different from the second embodiment in that a sales assistant device 260 connected to the smart device 250 includes a barcode reader 1202 and a hub 1201 is used to simultaneously connect them.

The remaining arrangement and the operation are the same as those in the second embodiment. Thus, the same arrangement and operation are denoted by the same reference numerals, and a detailed description thereof will not be repeated.

An application executor 414 acquires sales information by receiving, via the smart device 250, barcode information read by using the barcode reader 1202 connected to the smart device 250.

The barcode information is converted into information such as the merchandise name and the price by referring to a merchandise database 1301 shown in Fig. 13.

According to this embodiment, more efficient sales processing can be performed by connecting the barcode reader 1202 to the smart device 250.

### [Fourth Embodiment]

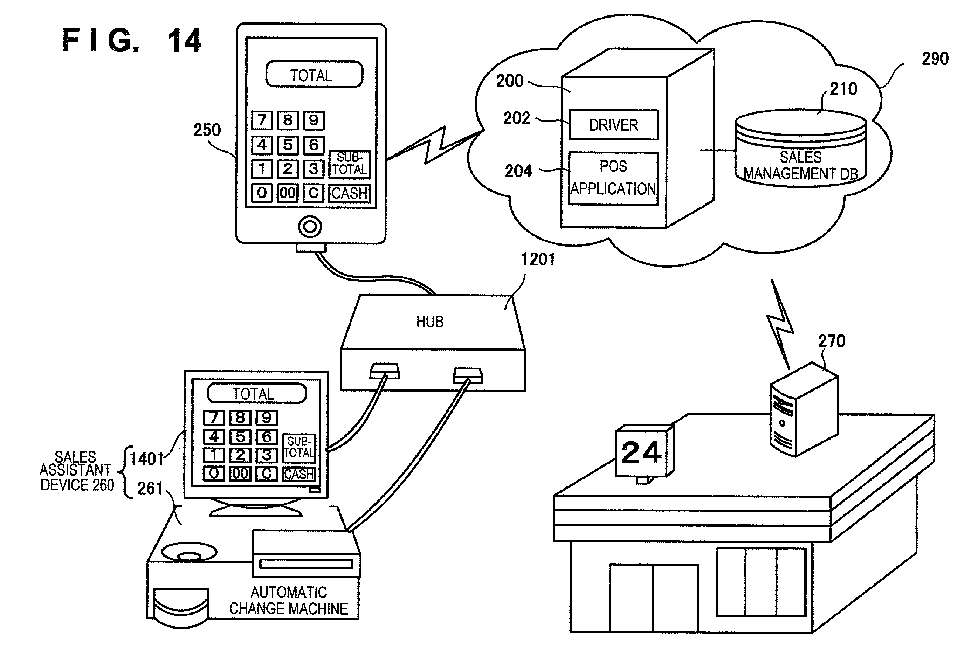

The fourth embodiment of the present invention will be described next with reference to Fig. 14. Fig. 14 is a view showing the arrangement of a system including a cloud server according to this embodiment. The arrangements of a cloud server 200 and smart device 250 are completely the same as those in the second embodiment. The fourth embodiment is different from the second embodiment in that a sales assistant device 260 connected to the smart device 250 includes a USB monitor 1401 and a hub 1201 is used to simultaneously connect them. The remaining arrangement and the operation are the same as those in the second embodiment. Thus, the same arrangement and operation are denoted by the same reference numerals, and a detailed description thereof will not be repeated.

This use method can provide a POS system with two screens (customer service screen and user screen).

### [Fifth Embodiment]

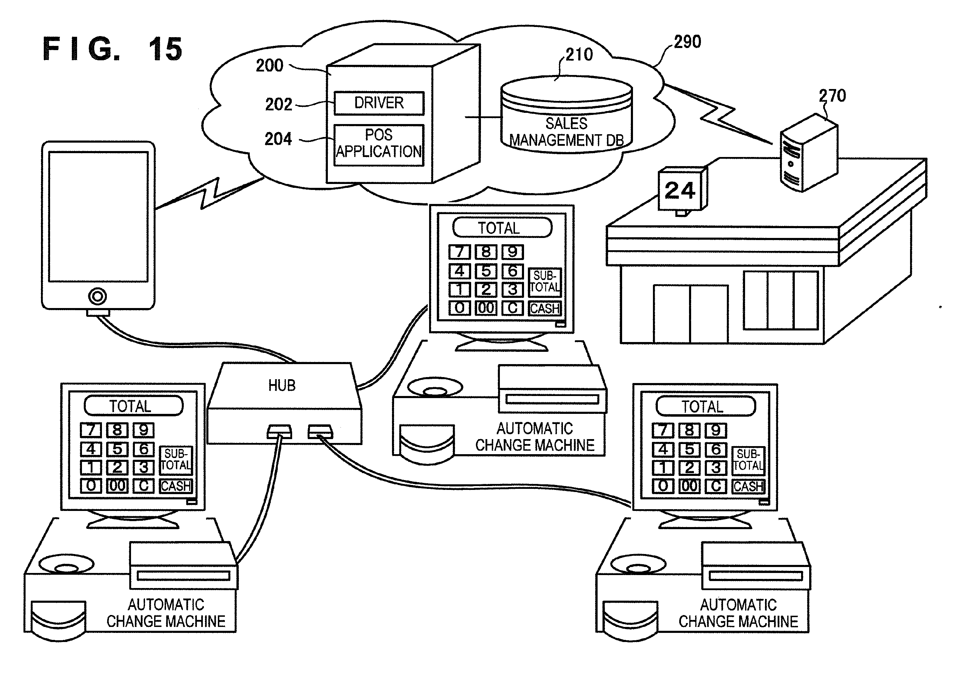

The fifth embodiment of the present invention will be described next with reference to Fig. 15. Fig. 15 is a view showing the arrangement of a system including a cloud server according to this embodiment. The arrangements of a cloud server 200 and smart device 250 are completely the same as those in the second embodiment. The fifth embodiment is different from the second embodiment in that a plurality of USB monitors 1401 and a plurality of automatic change machines 261 are included as sales assistant devices 260 connected to the smart device 250, and a hub 1201 is used to simultaneously connect them. The remaining arrangement and the operation are the same as those in the second embodiment. Thus, the same arrangement and operation are denoted by the same reference numerals, and a detailed description thereof will not be repeated. The sales assistant devices 260 are respectively identified and registered with different register IDs in a sales management database 210, as in the second embodiment. Therefore, a plurality of POS systems can also be simultaneously built, as shown in Fig. 15.

This use method can provide a plurality of POS systems by using one smart device.

### [Sixth Embodiment]

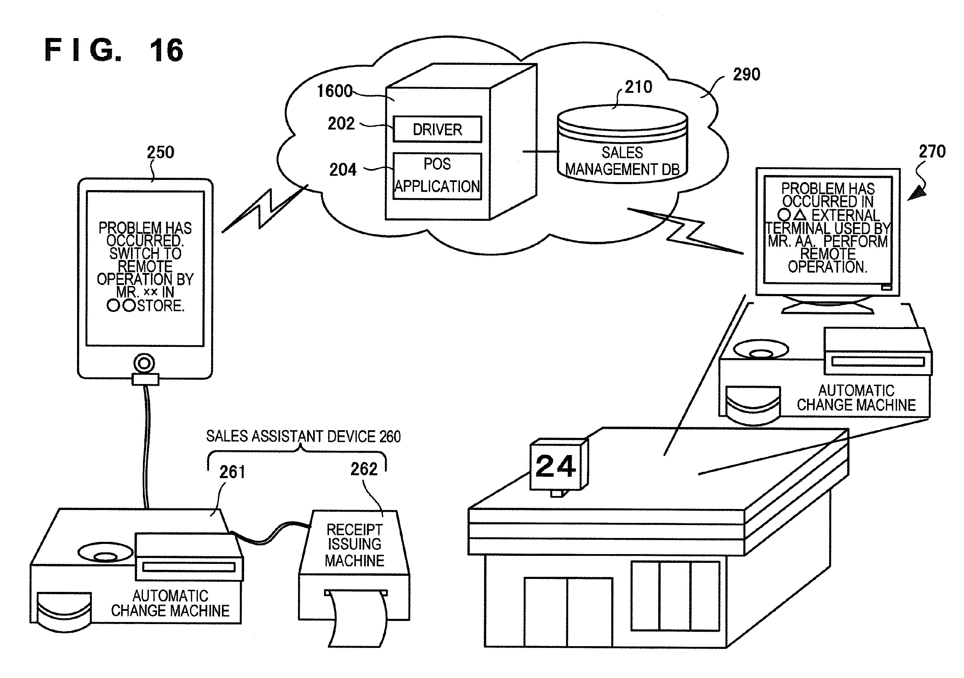

The sixth embodiment of the present invention will be described next with reference to Figs. 16 to 18. Fig. 16 is a view showing the arrangement of a system including a cloud server 1600 according to this embodiment. The arrangement of a smart device 250 is completely the same as that in the second embodiment. The sixth embodiment is different from the second embodiment in that when an error occurs in a sales assistant device 260 connected to the smart device 250, a notification indicative of this arrives at an in-store POS terminal 270 and the sales assistant device 260 can be remote-controlled from the POS terminal. The remaining arrangement and the operation are the same as those in the second embodiment. Thus, the same arrangement and operation are denoted by the same reference numerals, and a detailed description thereof will not be repeated.

When a problem occurs in sales processing using the smart device 250 and the sales assistant device 260, as shown in Fig. 16, this system can accept a remote operation from the in-store POS terminal 270. Even when an error occurs in the sales assistant device 260 via the remote smart device 250, a device operation support by an experienced operator in the store can be received.

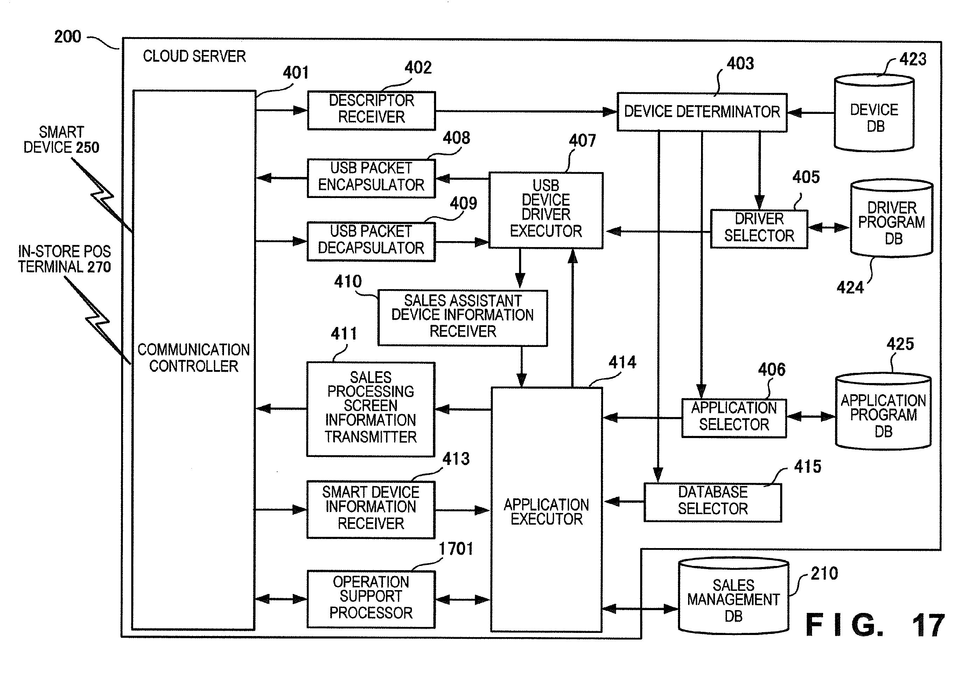

Fig. 17 is a block diagram showing the functional arrangement of the cloud server 1600 according to this embodiment. The cloud server 1600 includes an operation support processor 1701 in addition to the arrangement of the cloud server 200 described in the second embodiment. When an error occurs in a POS system built by the smart device 250 and the sales assistant device 260, the operation support processor 1701 notifies the in-store POS terminal 270 of the error. The operation support processor 1701 accepts, from the in-store POS terminal 270, a remote operation for canceling the error. If the error is canceled, information about the error canceling operation is accumulated in a sales management database 210, and when a similar error occurs in the future, read out and transmitted to the smart device 250.

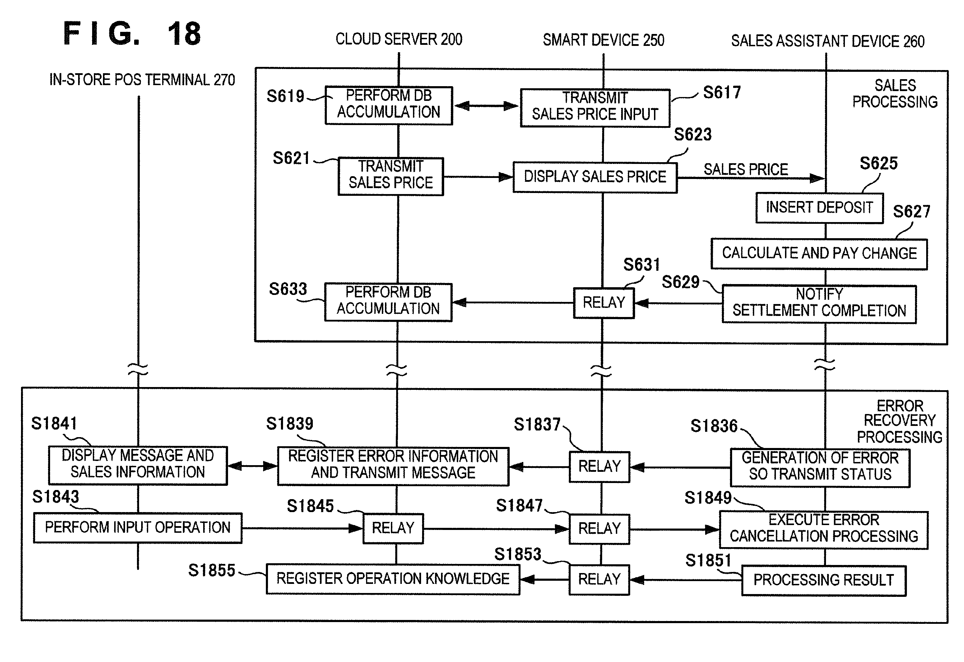

Fig. 18 is a sequence chart showing the overall processing sequence of the system. The basic processing sequence is the same as that in the second embodiment described with reference to Fig. 6. Thus, the same processes are denoted by the same reference numerals, and a description thereof will not be repeated.

In error recovery processing, if an error occurs in the sales assistant device 260, the status is transmitted to the cloud server 200 (S1836) while being relayed by the smart device 250 (S1837), in order to notify the status. The cloud server 200 accumulates the error information as knowledge, generates a message to request a remote operation, and transmits the message to the in-store POS terminal 270 that corresponds to the sales assistant device 260 (S 1839). The correspondence between the sales assistant device 260 and the in-store POS terminal 270 is saved in advance in a correspondence table 1001, and the address of the in-store POS terminal 270 can be derived.

The in-store POS terminal 270 displays the message and the sales information in which the error has occurred (S1841).

After that, a remote operation is input from the in-store POS terminal 270 (S1843). The operation information is relayed by the cloud server 200 and the smart device 250 (S 1845 and S1847), and transmitted to the sales assistant device 260 to execute error cancellation processing. If a processing result such as an error cancellation success or an error cancellation failure is obtained (S1851), the processing result is relayed by the smart device 250 (S1853), and registered as operation knowledge in the cloud server 200 in association with the generated error (S1855).

Note that a screen being viewed now by a salesclerk who requires an action support may be specified to display an action support message on the screen, or an action support sound may be output to the earphones of the salesclerk who requires an action support. It is also possible to record action support information as moving image information, audio information, or distribution text information in the cloud server 200, measure the availability, and expand the store database. Further, a plurality of members in a related department registered in advance in the store database may be simultaneously contacted in accordance with contact contents such as error information.

It is also possible to convert a transmitted sound into a text by speech recognition during action support, create a summary from the text, also create a summary from text exchange, register the summary in the store database, and then contact a superior, a store manager, or the like.

With the above-described arrangement, the in-store POS terminal 270 and the smart device 250 communicate with each other. Even if an error occurs in a temporary store at a remote place, it can be canceled by a remote operation by an experienced operator in the home store.

### [Seventh Embodiment]

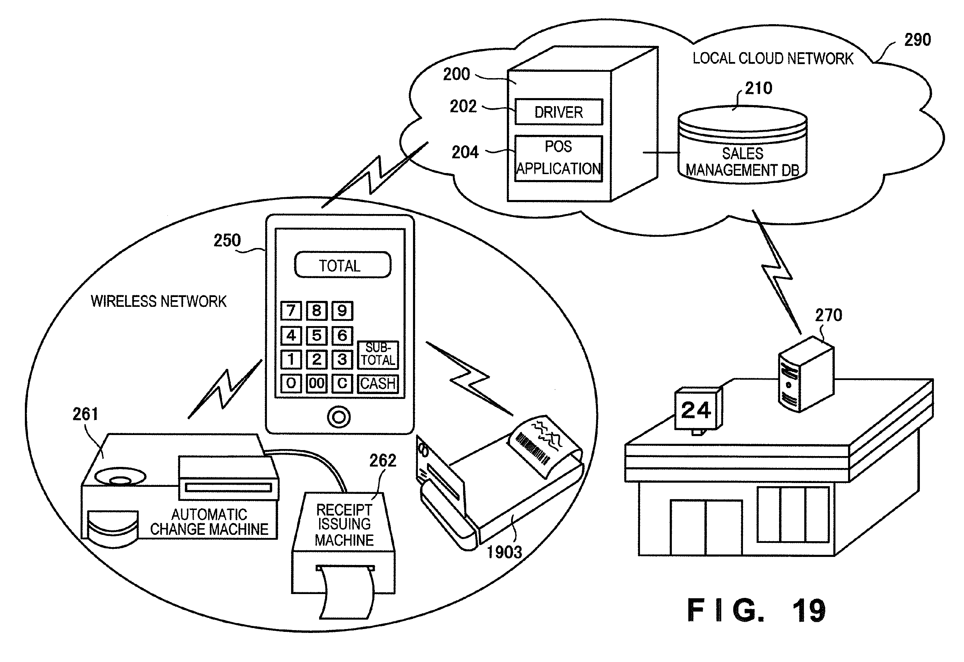

An information processing apparatus according to the seventh embodiment of the present invention will be described next with reference to Fig. 19. Fig. 19 is a view showing the arrangement of a system including a cloud server 200 as the information processing apparatus according to this embodiment.

In this arrangement, a sales assistant device 260 connected to a smart device 250 includes an automatic change machine 261, a receipt issuing machine 262, and a credit card reader 1903. These devices are connected to each other not by USB, but via a wireless interface such as Bluetooth®. The remaining arrangement and the operation are the same as those in the second embodiment. Thus, the same arrangement and operation are denoted by the same reference numerals, and a detailed description thereof will not be repeated.

Also in this case, the cloud server 200 acquires a device descriptor from the sales assistant device 260 via the smart device 250 to specify the sales assistant device 260 and specify a sales management database 210 corresponding to the sales assistant device 260.

When a plurality of sales assistant devices 260 are connected by wireless communication in this manner, the respective devices can be operated at a higher degree of freedom.

For example, the user may carry only the smart device 250 with him, settle accounts at the location of a customer, receive money, move to the automatic change machine, and bring the change and the receipt to the customer. Alternatively, the user may carry only the credit card reader 1903 and the smart device 250, and perform account settlement processing at the location of a customer requiring card settlement.

In this case, the customer need neither move nor carry merchandise with him.

On the other hand, a plurality of smart devices may be wirelessly connected to one automatic change machine. In this case, an application provides a "money insertion" button on the display unit of the smart device. At the timing when this button is pressed, the automatic change machine acquires settled amount information, accepts insertion of money, and pays the change.

According to this embodiment, the smart device 250 and the sales assistant device 260 are connected by wireless communication, so the POS system can be built more conveniently and efficiently.

### [Other Embodiments]

An example in which the smart device is used as the portable communication terminal has been explained. However, the present invention is not limited to this, and a mobile phone or a mobile router may be used as the portable communication terminal.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. The present invention also incorporates a system or apparatus obtained by arbitrarily combining separate features included in the respective embodiments.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention on the computer, a medium storing the program, and a WWW (World Wide Web) server that causes a user to download the program. However, the embodiment has described the cloud server, but the present invention is not limited to this.

This application claims the benefit of Japanese Patent Application No. 2012-125369 filed on May 31, 2012, which is hereby incorporated by reference herein in its entirety.

## Claims

1. An information processing apparatus comprising:
an acquirer that, when a sales assistant device is connected to a portable communication terminal, acquires, via the portable communication terminal, specifying information for specifying the sales assistant device;
a driver executor that executes a driver program corresponding to the specifying information and controls the sales assistant device;
an application executor that executes a sales management application program corresponding to the specifying information and transmits sales processing screen information to the portable communication terminal; and
a specifier that specifies, based on the specifying information, a sales management database in which sales-related information acquired under control of the sales assistant device should be accumulated.

2. The information processing apparatus according to claim 1, wherein said application executor accumulates the sales-related information in the sales management database specified by said specifier.

3. The information processing apparatus according to claim 1 or 2, wherein said application executor acquires sales information input to the portable communication terminal and accumulates the sales information in the sales management database specified by said specifier.

4. The information processing apparatus according to claim 1, 2, or 3, wherein said application executor acquires sales price information of merchandise by receiving barcode information acquired by reading a barcode attached to the merchandise by using an image sensor incorporated in the portable communication terminal.

5. The information processing apparatus according to any one of claims 1 to 4, wherein said application executor acquires sales price information of the merchandise by receiving barcode information acquired by reading a barcode attached to the merchandise by using a barcode reader connected to the portable communication terminal.

6. The information processing apparatus according to any one of claims 1 to 5, wherein said application executor acquires at least one of position information and time information of the portable communication terminal at the time of sales from the portable communication terminal, and accumulates the acquired information in the sales management database together with the sales-related information.

7. The information processing apparatus according to any one of claims 1 to 6, wherein the sales assistant device is an automatic change machine, and the sales-related information is information about money inserted into the automatic change machine and a paid change.

8. The information processing apparatus according to claim 7, wherein the sales assistant device is a receipt issuing machine.

9. The information processing apparatus according to any one of claims 1 to 8, further comprising a receiver that receives sales-related information from the sales assistant device via the portable communication terminal.

10. The information processing apparatus according to any one of claims 1 to 9, wherein
the portable communication terminal is connected to a display serving as the sales assistant device, and
said application executor further executes the sales management application program corresponding to the specifying information, and transmits sales processing screen information to the display.

11. The information processing apparatus according to claim 10, wherein
the portable communication terminal is connected to a plurality of displays serving as the sales assistant device, and
said application executor further executes the sales management application program corresponding to the specifying information, and transmits sales processing screen information to the plurality of displays.

12. The information processing apparatus according to any one of claims 1 to 11, further comprising a requester that, when an error occurs in the sales assistant device connected to the portable communication terminal, requests, of another terminal associated in advance with the sales assistant device, a remote operation of the sales assistant device from the other terminal.

13. The information processing apparatus according to any one of claims 1 to 12, wherein even when the sales assistant device is wirelessly connected to the portable communication terminal, said acquirer acquires, via the portable communication terminal, the specifying information for specifying the sales assistant device.

14. The information processing apparatus according to any one of claims 1 to 13, wherein
said application executor determines whether the sales assistant device connected to the portable communication terminal is a predetermined device, and
the information processing apparatus further comprises a notifier that, when the sales assistant device connected to the portable communication terminal is not a predetermined device, notifies the portable communication terminal of a sales assistant device which should be connected.

15. An information processing method comprising:
when a sales assistant device is connected to a portable communication terminal, acquiring, via the portable communication terminal, specifying information for specifying the sales assistant device;
executing a driver program corresponding to the specifying information to control the sales assistant device;
executing an application program corresponding to the specifying information to transmit sales processing screen information to the portable communication terminal; and
specifying, based on the specifying information, a sales management database in which sales-related information acquired under control of the sales assistant device should be accumulated.

16. An information processing program for causing a computer to execute a method, comprising:
when a sales assistant device is connected to a portable communication terminal, acquiring, via the portable communication terminal, specifying information for specifying the sales assistant device;
executing a driver program corresponding to the specifying information to control the sales assistant device;
executing an application program corresponding to the specifying information to transmit sales processing screen information to the portable communication terminal; and
specifying, based on the specifying information, a sales management database in which sales-related information acquired under control of the sales assistant device should be accumulated.

17. A portable communication terminal comprising:
a determinator that, when a sales assistant device is connected via a communication interface, determines whether a local terminal can control the sales assistant device;
a requester that, when said determinator determines that the local terminal cannot control the sales assistant device, accesses a server via a wireless communication network, and requests control of the sales assistant device;
a signal transfer controller that controls signal transfer between the sales assistant device and the server via the communication interface and the wireless communication network so as to be able to establish communication between the sales assistant device and the server and acquire sales-related information by the server from the sales assistant device; and
a receiver that receives, from the server, sales processing screen information generated by executing, by the server, a sales management application program corresponding to the sales assistant device.

18. A control method of a portable communication terminal, comprising:
when a sales assistant device is connected via a communication interface, determining whether a local terminal can control the sales assistant device;
when the local terminal is determined not to be able to control the sales assistant device, accessing a server via a wireless communication network to request control of the sales assistant device;
controlling signal transfer between the sales assistant device and the server via the communication interface and the wireless communication network so as to be able to establish communication between the sales assistant device and the server and acquire sales-related information by the server from the sales assistant device; and
receiving, from the server, sales processing screen information generated by executing, by the server, a sales management application program corresponding to the sales assistant device.

19. A control program of a portable communication terminal for causing a computer to execute a method, comprising:
when a sales assistant device is connected via a communication interface, determining whether a local terminal can control the sales assistant device;
when the local terminal is determined not to be able to control the sales assistant device, accessing a server via a wireless communication network to request control of the sales assistant device;
controlling signal transfer between the sales assistant device and the server via the communication interface and the wireless communication network so as to be able to establish communication between the sales assistant device and the server and acquire sales-related information by the server from the sales assistant device; and
receiving, from the server, sales processing screen information generated by executing, by the server, a sales management application program corresponding to the sales assistant device.

20. An information processing system comprising:
an information processing apparatus including:
an acquirer that, when a sales assistant device is connected to a portable communication terminal, acquires, via the portable communication terminal, specifying information for specifying the sales assistant device;
a driver executor that executes a driver program corresponding to the specifying information and controls the sales assistant device;
an application executor that executes a sales management application program corresponding to the specifying information and transmits sales processing screen information to the portable communication terminal; and
a specifier that specifies, based on the specifying information, a sales management database in which sales-related information acquired under control of the sales assistant device should be accumulated;
the portable communication terminal; and
the sales assistant device.
